# EUROPÄISCHE PATENTSCHRIFT

(11) **EP 0 996 683 B1**
(45) Veröffentlichungstag und Bekanntmachung des Hinweises auf die Patenterteilung: **02.04.2003**
(21) Anmeldenummer: 98940148.4
(22) Anmeldetag: 06.07.1998
(51) Int. Cl.: C09D 5/38, C09D 5/02

(54) **VERWENDUNG VON WASSERVERDÜNNBAREN BESCHICHTUNGSZUSAMMENSETZUNGEN**
USE OF WATER-DILUTABLE COATING COMPOSITIONS
UTILISATION DES COMPOSITIONS DE REVETEMENT DILUABLES A L'EAU

(30) Priorität: 05.07.1997 DE 19728856
(43) Veröffentlichungstag der Anmeldung: 03.05.2000
(73) Patentinhaber: BASF Coatings AG, 48165 Münster (DE)
(72) Erfinder: LASSMANN, Walter, D-48165 Münster (DE)
(74) Vertreter: Fitzner, Uwe, Dr.
(86) Internationale Anmeldenummer: EP9804163
(87) Internationale Veröffentlichungsnummer: WO99002613

(56) Entgegenhaltungen:
- EP-A- 0 393 579
- WO-A-98/17731
- CH-A- 409 202
- GB-A- 2 053 258

## Beschreibung

Die Erfindung betrifft die Verwendung wasserverdünnbarer Beschichtungszusammensetzungen, die Bindemittel, Aluminiumpigment und ein wäßriges Verdünnungsmittel enthalten, als Basisbeschichtungszusammensetzung zur Herstellung von "Basecoat/Clearcoat"-Metalleffektlackierungen.

Wasserverdünnbare Beschichtungszusammensetzungen, die Bindemittel, Aluminiumpigment und ein wäßriges Verdünnungsmittel enthalten, sind bekannt und sollen insbesondere in der Automobillackierung zur Herstellung von Metalleffektlackierungen eingesetzt werden.

Metalleffektlackierungen werden heute bevorzugt nach dem sogenannten "Basecoat-Clearcoat"-Verfahren aufgebracht, bei dem ein mit Aluminiumpigmenten pigmentierter Basislack vorlackiert und anschließend mit einem Klarlack überzogen wird.

Ein besonderes Problem wäßriger Beschichtungszusammensetzungen zur Herstellung von Metalleffektlackierungen liegt darin, daß sie oft einen pH-Wert aufweisen, der so hoch ist, daß die verwendeten Aluminiumpigmente unter Wasserstoffbildung mit Wasser reagieren. Dieses Phänomen zieht eine Reihe von Problemen nach sich, insbesondere bei Lagerung der Lackmaterialien in geschlossenen Behältern.

Es sind eine Reihe von Verfahren bekannt geworden, mit deren Hilfe Aluminiumpigmente so passiviert werden sollen (vgl. z.B. EP-A-0581235), daß gar keine bzw. nur noch eine sehr geringfügige Wasserstoffentwicklung auftritt. Alle diese Verfahren weisen jedoch den Nachteil auf, daß die Gasungsstabilität noch nicht zufriedenstellend ist. Beim Einsatz von bekannten, durch Chromatierung passivierten Aluminiumpigmenten müssen Beeinträchtigungen im Farbton und Metalleffekt (Flop) der Metalleffektlackierungen in Kauf genommen werden.

Der vorliegenden Erfindung liegt die Aufgabe zugrunde, eine wasserverdünnbare Beschichtungszusammensetzung enthaltend Bindemittel, anorganische und ggfs. organische Pigmente sowie weitere übliche Zusätze wie Lösungsmittel, Füllstoffe, Weichmacher, Stabilisatoren, Netzmittel, Dispergierhilfsmittel, Verlaufsmittel, Entschäumer, Katalysatoren sowie weitere Additive einzeln oder im Gemisch miteinander bereitzustellen, die bei Verwendung als Basisbeschichtungszusammensetzung zur Herstellung von "Basecoat/Clearcoat"-Metalleffektlackierungen, die oben dargestellten Nachteile des Standes der Technik nicht aufweisen.

Diese Aufgabe wird erfindungsgemäß dadurch gelöst, daß sie wenigstens einen Phosphorsäureester und wenigstens ein Fettalkoholalkoxylat enthält.

Die erfindungsgemäß zu verwendenden wasserverdünnbaren Beschichtungszusammensetzungen können im Prinzip alle für wasserverdünnbare Beschichtungszusammensetzungen geeigneten Bindemittel enthalten.

Als Bindemittel sind demgemäß sowohl veredelte Naturprodukte, z.B. aus Kolophonium und Ölen oder Cellulosenitraten als auch vollsynthetisch aufgebaute Harze verwendbar. Zu letzteren zählen u.a. Phenolharze, Aminharze (z.B. Harnstoff-, Melaminharze), Alkydharze, Polyvinylacetate, Epoxidharze, Polyurethanharze, Polyesterharze, mit Kolophonium modifizierte Phenolharze, Chlorkautschuke, chloriertes Polypropylen, Cyclokautschuke, Ketonharze und Acrylatharze.

Insbesondere werden als Bindemittel wasserverdünnbare bzw. wasserdispergierbare und in organischer Lösung darstellbare Polyurethanharze, Polyacrylatharze, Polyesterharze und Aminoplastharze sowie deren Mischungen eingesetzt.
Die als Bindemittel eingesetzten Polyurethanharze sind prinzipiell bekannt. Geeignet sind beispielsweise die in der Literatur für den Einsatz in Wasserbasislacken beschriebenen Polyurethanharze, sofern diese Polyurethanharze - in Abwandlung der in der jeweiligen Literatur beschriebenen Herstellung - in Form organischer Lösungen darstellbar sind.

Beispiele für geeignete Polyurethanharze sind die in den folgenden Schriften beschriebenen Harze:
EP-A-355433, DE-OS 3545618, DE-OS 3813866 sowie die noch nicht veröffentliche deutsche Patentanmeldung DE 4005961.8
Bezüglich näherer Einzelheiten der Herstellung der Polyurethanharze und Beispiele geeigneter Verbindungen sei daher auf diese Schriften verwiesen.

Die als Bindemittel eingesetzten Polyacrylatharze sind ebenfalls bekannt und beispielsweise in DE-OS 3832826 beschrieben. Geeignet sind allgemeine wasserverdünnbare bzw. wasserdispergierbare Polyacrylatharze, die sich in Form organischer Lösungen darstellen lassen.

Als Bindemittel geeignet sind auch wasserverdünnbare bzw. wasserdispergierbare und in Form organischer Lösungen darstellbare Polyesterharze. Eingesetzt werden beispielsweise entsprechende handelsübliche wasserverdünnbare bzw. wasserdispergierbare Polyesterharze sowie die überlicherweise in Wasserbasislacken eingesetzten Polyesterharze.

Als Bindemittel sind auch wasserverdünnbare bzw. wasserdispergierbare Aminoplastharze geeignet. Bevorzugt werden wasserverdünnbare Melaminharze eingesetzt. Es handelt sich hierbei im allgemeinen um veretherte Melamin-Formaldehyd-Kondensationsprodukte.
Die Wasserlöslichkeit der Aminoplastharze hängt - abgesehen vom Kondensationsgrad, der möglichst gering sein soll - von der Veretherungskomponente ab, wobei nur die niedrigsten Glieder der Alkohol bzw. Ethylenglykolmonoetherreihe wasserlösliche Kondensate ergeben. Die größte Bedeutung haben die mit Methanol veretherten Melaminharze. Bei Verwendung von Lösungsvermittlern können auch butanolveretherte Melaminharze in wäßriger Phase dispergiert werden. Es besteht auch die Möglichkeit, Carboxylgruppen in das Kondensat einzufügen. Umetherungsprodukte hochveretherter Formaldehydkondensate mit Oxycarbonsäuren sind über ihre Carboxylgruppen nach Neutralisation wasserlöslich und können in den Basisfarben enthalten sein.

Als Bindemittel können selbstverständlich auch Mischungen der genannten Bindemittel sowie zusätzlich oder alleine andere wasserverdünnbare bzw. wasserdispergierbare Bindemittel eingesetzt werden.

Die erfindungsgemäß zu verwendenden Überzugsmittel können übliche Zusätze wie Lösungsmittel, Weichmacher, Stabilisatoren, Netzmittel, Rheologiehilfsmittel, Dispergierhilfsmittel, Verlaufsmittel, Entschäumer und Katalysatoren, sowie Additive einzeln oder im Gemisch in den üblichen Mengen enthalten. Diese Substanzen können den Einzelkomponenten und/oder der Gesamtmischung zugesetzt werden.

Die erfindungsgemäß zu verwendenden Überzugsmittel können neben Wasser die üblichen Lösungsmittel, beispielsweise aliphatische oder aromatische Kohlenwasserstoffe ein- oder mehrwertige Alkohole, Ether, Ester, Glykolether sowie deren Ester, Ketone wie z.B. Toluol, Xylol, Butanol, Ethyl- oder Butylglykol (= Ethylenglykolmonoethyl- oder -Butylether) sowie deren Acetate, Butyldiglykol (Ethylenglykoldibutylether), Ethylenglykoldimethylether, Diethylenglykoldimethylether, Cyclohexanon, Methylethylketon, Aceton, Isophoron oder Mischungen davon entalten.

Weiterhin können den erfindungsgemäß zu verwendenden Basislacken vernetzte polymere Mikroteilchen, wie sie z.B. in der EP-A-38 127 offenbart sind und/oder übliche anorganische oder organische Additive zugesetzt werden. So wirken als Verdicker beispielsweise Schichtsilikate, wasserlösliche Celluloseether, wie Hydroxyethylcellulose, Methylcellulose oder Carboxymethylcellulose sowie synthetische Polymere mit ionischen und/oder assoziativ wirkenden Gruppen, wie Polyvinylalkohol, Poly(meth)acrylsäure, Polyvinylpyrrolidon, Styrol-Maleinsäureanhydrid oder Ethylen-Maleinsäureanhydrid-Copolymere und ihre Derivate oder auch hydrophob modifizierte ethoxylierte Piperidin und Triethanolamin verwendet. Besonders bevorzugt werden tertiäre Amine als Neutralisationsmittel eingesetzt, insbesondere Dimethylethanolamin, Triethylamin, Tripropylamin und Tributylamin.

Die erfindungsgemäß zu verwendenden Basisbeschichtungszusammensetzungen können alle bekannten und in der Lackindustrie üblichen Pigmente oder Farbstoffe enthalten.

Als Farbstoffe bzw. Pigmente, die anorganischer oder organischer Natur sein können, werden beispielsweise genannt Titandioxid, Graphit, Ruß, Zinkchromat, Strontiumchromat, Bariumchromat, Bleichromat, Bleicyanamid, Bleisilicochromat, Zinkoxid, Cadmiumsulfid, Chromoxid, Zinksulfid, Nickeltitangelb, Chromtitangelb, Eisenoxidrot, Eisenoxidschwarz, Ultramarinblau, Phthalocyaninkomplexe, Naphtholrot, Chinacridone, halogenierte Thioindigo-Pigmente oder dergleichen.

Als besonders bevorzugte Pigmente werden Metallpulver einzeln oder im Gemisch wie Kupfer, Kupferlegierungen, Aluminium und Stahl, vorzugsweise Aluminiumpulver, in wenigstens überwiegendem Anteil eingesetzt, und zwar in einer Menge von 0,5 bis 25 Gew.-% bezogen auf den gesamten Festkörpergehalt der Überzugsmittel an Bindemitteln. In Betracht kommen auch marktübliche Perlglanzpigmente. Ebenso ist der Einsatz von Kombinationen mit transparentem Metalloxid, z.B. Eisenoxidrot, Titandioxid denkbar. Als metallische Pigmente werden handelsübliche unbehandelte Metallpulver und auch solche, die für wäßrige Systeme speziell vorbehandelt sind, eingesetzt.
Die Metallpulver können auch zusammen mit einem oder mehreren der obengenannten nichtmetallischen Pigmente bzw. Farbstoffe eingesetzt werden. In diesem Fall wird deren Anteil so gewählt, daß der erwünschte Metallic-Effekt nicht unterdrückt wird.

Ferner enthält die erfindungsgemäß zu verwendende Beschichtungszusammensetzung Ester der Phosphorsäure mit Alkoholen oder Phenolen. Zum Einsatz kommen sowohl Aryl-, Alkyl- als auch gemischte Phosphorsäureester sowie Phosphorsäurederivate. Geeignete Phosphorsäurederivate sind beispielsweise aus der EP-A-0 581 235 bekannt.

Es wurde nun gefunden, daß die Stabilisierung von Metallpigmenten, insbesondere Aluminiumpigmenten, noch wesentlich verbessert und damit eine Langzeitschutzwirkung für die Metallpigmente in wäßrigen und nicht-wäßrigen Lackzubereitungen auch unter extremen Bedingungen erreicht werden kann, wenn die Phosphorsäureester im Gemisch mit Fettalkohol Alkoxilaten eingesetzt werden. Insbesondere wird durch diese Maßnahme die Gasungsstabilität gesteigert.

Erfindungsgemäß bevorzugt werden Ether eingesetzt, die durch Polyaddition von Ethylenoxid entstanden sind, d.h. durch Insertion einer oder mehrerer - CH₂ - CH₂ - O -Gruppen in Verbindung mit einem aciden Sauerstoffatom mit Hilfe von Ethylenoxid. Geeignete Substrate sind Fettalkohole, Alkylphenole, Fettamine, Fettsäuren und deren Amide, Fettsäureester, Mercaptane und Imidazoline.

Die Produkte der technischen, bei Temperaturen von 120 bis 220 °C unter Druck (ca. 1 bis 5 bar) ausgeführten Reaktionen sind lineare Ether bzw. Polyether, die an einem Kettenende eine Hydroxygruppe und am anderen eine vom Ausgangsprodukt abhängige funktionelle Gruppe tragen. Die Anlagerung einer definierten Menge Ethylenoxid an das Substrat liefert eine Verteilung homologer Ethoxylate, deren Breite insbesondere durch die Wahl des Katalysators beeinflußt werden kann.

Üblicherweise finden alkalische Katalysatoren, insbesondere Natriummethylat Verwendung, die zu einer weiten Schulz-Flory-Homologen-Verteilung führen, während Erdalkali-Salze (z.B. Calciumacetat, Strontiumphenolat) eine Einengung gemäß einer Poisson-Verteilung hervorrufen. Saure Katalysatoren (z.B. Antimonpentachlorid) bewirken ebenfalls eine deutliche Einengung der Homologen-Verteilung.

Erfindungsgemäß besonders bevorzugt werden die sich von den Fettalkoholen ableitenden Ethoxylate der allgemeinen Formel RO - (CH₂- CH₂-O)ₙ-H mit n= 4 - 10. Zu den bevorzugt eingesetzten Verbindungen gehören die Fettalkoholpolyglykolether. Daneben kommen auch Alkylphenolpolyglykolether zum Einsatz.

Erfindungsgemäß werden die Phosphorsäureester und die Fettalkoholalkoxylate im Gemisch miteinander eingesetzt. Der Anteil des Gemischs liegt bei 1-20 Gew.-%, vorzugsweise 1-10 Gew.-% bezogen auf den Festkörper des zu stabilisierenden Pigments. Die Dichte des Gemischs beträgt 1,02 g/cm³ und dessen Viskosität liegt bei 400 mPas.

Eine erfindungsgemäß verwendbare Mischung aus Phosphorsäureester und Fettalkoholalkoxylat enthält bevorzugt 2-98 Gew.-% Phosphorsäureester und 2-98 Gew.-% Fettalkoholalkoxylat, wobei optional übliche organische Lösemittel und/oder von dem Phosphorsäureester und Fettalkoholalkoxylat verschiedene als Additiv oder Lackkomponente wirkende Stoffe zugegen sein können. Es versteht sich, daß die Anteile der vorstehenden erfindungsgemäßen Mischung sich stets auf 100 Gew.-% addieren. Vorzugsweise enthält die Mischung 20-80 Gew.-%, höchstvorzugsweise 40-60 Gew.-%, beispielsweise 50 Gew.-%, Phosphorsäureester. Unabhängig hiervon kann das Fettalkoholalkoxylat in Anteilen von vorzugsweise 20-80 Gew.-%, höchstvorzugsweise 40-60 Gew.-%, beispielsweise 50 Gew.-%, zugegen sein, Bevorzugt ist es, wenn die vorstehende Mischung frei von den optionalen Komponenten ist.

Das Gemisch enthaltend Effektpigment, Phosphorsäureester und Fettalkoholalkoxylat wird mit den oben beschriebenen Bindemitteln, Lackhilfsmitteln, Füllstoffen und Pigmenten vermischt. Zunächst wird die Metallschlämme hergestellt, indem Bronze vorgelegt, 50 % des in der Schlämme eingesetzten Lösemittel, sodann das Stabilisierungsmittel, die übrigen 50 % des Lösungsmittels, danach das Bindemittel und schließlich das Neutralisationsmittel zugegeben werden. Dieser wird mit dem Metalliclack vermischt. Überraschend hat sich gezeigt, daß insbesondere bei Einhaltung dieser Herstellungsweise die Gasungsstabilität signifikant verbessert wird. Ebenso werden Oxidationserscheinungen auf der Oberfläche der Metallpigmente verhindert. Das sonst üblicherweise zu beobachtende Grauwerden der Pigmentoberflächen und der Verlust der Helligkeit ist mit den erfindungsgemäßen Zusätzen nicht mehr zu beobachten.

Neben den erfindungsgemäßen Zusätzen können noch weitere der Passivierung dienende Stoffe zugesetzt werden. Ein Beispiel sind Aluminiumpigmente, die erhalten worden sind, indem ein schmiermittelbelegtes Aluminiumpigment in einer wäßrigen Passivierungslösung, die Chromsäure und einen wasserlöslichen Glykolether der allgemeinen Formel R¹ (-O-CHR²- CH₂)ₙ OH (R¹ steht für einen niederen Alkylrest, R² steht entweder für ein H-Atom oder einen niederen Alkylrest, vorzugsweise für eine -CH₃- Gruppe, n steht für eine Zahl von 1 bis 5) und/oder ein wasserlösliches Glykol der allgemeinen Formel HO-(CHR³- CH₂ -O-)ₙ H (R³ steht entweder für ein H-Atom oder für einen niederen Alkylrest, vorzugsweise für eine -CH₃- Gruppe, n steht für eine Zahl von 1 bis 5) enthält, bei mindestens 50 °C, vorzugsweise 60 bis 90 ° C, besonders bevorzugt etwa 80 °C, passiviert worden ist.

Um Pigmente mit den gewünschten Eigenschaften zu erhalten, müssen Pigmente eingesetzt werden, die einen bestimmten Mindestgehalt an Schmiermittel aufweisen. Der Schmiermittelgehalt wird vorzugsweise im Laufe des Herstellungsprozesses der Aluminiumpigmente eingestellt.

Mit Fettaminen als Schmiermittel belegte Aluminiumpigmente führen zu passivierten Pigmenten, die ganz besonders vorteilhafte Eigenschaften haben. Unter Fettaminen werden Gemische langkettiger, vorwiegend primärer Alkylamine, die z.B. aus Fettsäuren über die zugehörigen Nitrile durch Reduktion gewonnen worden sind, verstanden.

Als schmiermittelbelegte Aluminiumpigmente können allgemein bekannte und gebräuchliche Aluminiumpigmente, die aus Aluminium oder Aluminiumlegierungen, vorzugsweise aus reinem Aluminium bestehen, eingesetzt werden. Es werden vorzugsweise blättchenförmige Aluminiumpigmente verwendet. Die Aluminiumpigmente können in Form der kommerziell erhältlichen Pasten ohne weitere Vorbehandlung eingesetzt werden.

Die Passivierung der schmiermittelbelegten Aluminiumpigmente wird bei mindestens 50 °C, vorzugsweise 60 bis 90 °C, besonders bevorzugt etwa 80 °C, in einer wäßrigen Lösung durchgerührt, die Chromsäure und einen wasserlöslichen Glykolether der allgemeinen Formel R¹- (-O-CHR²- CH₂)ₙ-OH (R¹ steht für einen niederen Alkylrest, R² steht entweder für ein H-Atom oder einen niederen Alkylrest, vorzugsweise für eine -CH₃- Gruppe, n steht für eine Zahl von 1 bis 5) und/oder ein wasserlösliches Glykol der allgemeinen Formel HO-(CHR³- CH₂ - O -)ₙ H (R³ steht entweder für ein H-Atom oder für einen niederen Alkylrest, vorzugsweise für eine -CH₃- Gruppe, n steht für eine Zahl von 1 bis 5) enthält.

Die wäßrige Lösung kann außerdem noch weitere, den Chromatierungsprozeß positiv beeinflussende Zusätze, wie z.B. Fluoride oder Phosphate, enthalten.

Besonders gute Resultate werden erhalten, wenn die Passivierungslösung Chromsäure und n-Butylglykol (CH₃- (CH₂)₃ - O - CH₂ -CH₂ -OH) enthält.

Sowohl die Chromsäure- als auch die Glykolether- bzw. Glykolkonzentration kann in weiten Grenzen variiert werden. Die erfindungsgemäße Passivierungslösung enthält in der Regel mindestens 1,5, vorzugsweise 1,5 bis 4,0, besonders bevorzugt 2,0 Gew.% Chromsäure und 3 bis 30, vorzugsweise 7 bis 15, besonders bevorzugt 10 Gew.-% wasserlöslichen Glykolether und/oder wasserlösliches Glykol.

Die Passivierung wird vorzugsweise in der frisch angesetzten Passivierungslösung durchgeführt und ist in der Regel nach 10 bis 30 Minuten abgeschlossen.

Nach Beendigung der Passivierung wird das erhaltene passivierte Pigment von der Passivierungslösung abgetrennt und gründlich mit Wasser ausgewaschen. Das so erhaltene passivierte Aluminiumpigment kann dann nach allgemein bekannten Methoden in wasserverdünnbare Beschichtungszusammensetzungen inkorporiert werden.

Die wasserverdünnbaren Beschichtungszusammensetzungen werden erfindungsgemäß als Basisbeschichtungszusammensetzungen zur Herstellung von "Basecoat/Clearcoat"Metalleffektlackierungen verwendet. Sie zeigen eine ausgezeichnete Stabilität gegenüber Wasserstoffentwicklung und liefern Metalleffektlackierungen, die in ihren optischen (Flop, Farbton usw.) und technologischen (Feuchtigkeitsunempfindlichkeit, Schwitzwasserresistenz, Zwischenhaftung) Eigenschaften mit Lackierungen vergleichbar sind, die unter Verwendung konventioneller (d.h. ausschließlich organische Lösungsmittel als Verdünnungsmittel enthaltenden) Basisbeschichtungszusammensetzungen hergestellt worden sind.

Die Anwendbarkeit der erfindungsgemäß zu verwendenden Beschichtungszusammensetzungen ist nicht auf die Automobillackierung beschränkt. Es können auch andere Substrate, die aus ggf. vorbehandeltem Metall, Holz, Kunststoff oder dergleichen bestehen, im Einschicht- oder Mehrschichtverfahren beschichtet werden.

Im folgenden wird die Erfindung unter Bezugnahme auf die Beispiele näher erläutert:

Es wurden unstabilisierte Bronzen mit und ohne Zusatz von Gemischen aus Phosphorsäureestern und Fettalkoholalkoxylaten untersucht. Als Gemisch mit den erfindungsgemäß eingesetzten Stoffen wurde Degressal verwendet. Aus der folgenden Tabelle ist ersichtlich, daß bei Einsatz ohne Zusatz von Degressal bereits nach einem Tag eine Ausgasung auftritt. Hingegen bewirkte die Zugabe von Degressal, daß die Gasungsinstabilität sich deutlich verringerte.

| Unstabilisierte Alu-Bronzen | | | |
|---|---|---|---|
| | 1 Tag | 1 Wo. | 3 Wo. |
| Alpate 8160 | ausgegast | | |
| Alpate 8160+2,5% | | | |
| Degressal SNC | | 12,2 ml | 11,8 ml |
| Alpate 8160+5,0% | | | |
| Degressal SNC | | 6,2 ml | 11,3 ml |
| Alpate 8160+10,0% | | | |
| Degressal SNC | | 10,0 ml | 11,0 ml |
| Metallux 2156 | ausgegast | | |
| Metallux 2156+2,5% | | | |
| Degressal SNC | | 4,8 ml | 10,2 ml |
| Metallux 2156+5,0% | | | |
| Degressal SNC | | 1,8 ml | 9,2 ml |
| Metallux 2156+10,0% | | | |
| Degressal SNC | | 0,0 ml | 9,2 ml |
| | | | |
| Alpate 8160+ | | | |
| Sicotransrot | ausgegast | | |
| Alpate 8160+ | | | |
| Sicotransrot+ | | | |
| 16,6 % Degressal | | 0,5 ml | 7,2 ml |
| Metallux 2156+ | | | |
| Sicotransrot | ausgegast | | |
| Metallux 2156+ | | | |
| Sicotransrot+ | | | |
| 16,6 % Degressal | | 3,5 ml | 10,0 ml |

Die Alpate-Produkte sind über die Fa. Toyal erhältlich.
Die Metallux-Produkte sind über die Fa. Eckart erhältlich.
Sicotransrot und Degressal sind Produkte der BASF AG.

Unabhängig von den vorstehend beschriebenen speziellen Beispielen und Ausführungsformen ist folgendes ergänzend anzumerken.

Der Ausdruck Metallpigmente definiert im Rahmen der Erfindung alle Arten von Pigmenten, welche ganz oder zum Teil metallhaltige Oberflächen aufweisen, wobei diese metallhaltigen Oberflächen bei Kontakt mit Wasser und bei überzugsmittelüblichen pH-Werten zur Gasbildung, insbesondere Wasserstoffbildung neigen. Es handelt sich dabei meist um elementar vorliegendes Metall oder um nicht hinreichend passivierte Metallverbindungsstrukturen. Metallpigmente können Effektpigmente sein, i.e. Pigmente, welche neben oder anstelle eines rein farbgebenden Effekts hiervon verschiedene optische Effekte hervorrufen. Solche Metallpigmente werden auch Metalleffektpigmente genannt. Metallpigmente können aber alternativ ausschließlich einen farbgebenden Effekt ausüben oder transparent sein.

## Patentansprüche

1. Verwendung einer wasserverdünnbaren Beschichtungszusammensetzung, enthaltend wenigstens einen Phosphorsäureester, wenigstens ein Fettalkoholalkoxylat, Bindemittel, anorganische Pigmente, Metallpigmente und gegebenenfalls organische Pigmente sowie weitere übliche Zusätze, wie Lösungsmittel, Füllstoffe, Weichmacher, Stabilisatoren, Netzmittel, Dispergierhilfsmittel, Verlaufsmittel, Entschäumer, Katalysatoren sowie weitere Additive einzeln oder im Gemisch miteinander, als Basisbeschichtungszusammensetzung zur Herstellung von "Basecoat/Clearcoat"-Metalleffektlackierungen.

2. Verwendung nach Anspruch 1, **dadurch gekennzeichnet, dass** die wasserverdünnbare Beschichtungszusammensetzung durch Zusatz eines aus Effektpigmenten, Phosphorsäureestern und Fettalkoholalkoxylaten bestehenden Gemischs erhältlich ist.

3. Verwendung nach Anspruch 1, **dadurch gekennzeichnet, dass** die wasserverdünnbare Beschichtungszusammensetzung Metallphosphorsäureester enthält.

4. Verwendung nach Anspruch 3, **dadurch gekennzeichnet, dass** die wasserverdünnbare Beschichtungszusammensetzung Aluminiumphosphorsäureester enthält.

5. Verwendung nach einem der Ansprüche 1 bis 4, **dadurch gekennzeichnet, dass** der Anteil an Phosphorsäureester und an Fettalkoholalkoxylat In der wasserverdünnbaren Beschichtungszusammensetzung zusammen 1 bis 20 Gew.%, bezogen auf den Festkörper des zu stabilisierenden Pigments, beträgt.

6. Verwendung nach Anspruch 5, **dadurch gekennzeichnet, dass** der Anteil an Phosphorsäureester und an Fettalkoholalkoxylat in der wasserverdünnbaren Beschichtungszusammensetzung zusammen 1 bis 10 Gew.%, bezogen auf den Festkörper des zu stabilisierenden Pigments, beträgt.

7. Verwendung nach einem der Ansprüche 1 bis 6, **dadurch gekennzeichnet, dass** als Effektpigmente Metallpulver einzeln oder im Gemische miteinander eingesetzt werden.

8. Verwendung nach einem der Ansprüche 1 bis 7, **dadurch gekennzeichnet, dass** als Effektpigmente Kupfer, Kupferlegierungen, Aluminium und/oder Stahl und/oder Perlglanzpigmente verwendet werden.

9. Verwendung nach einem der Ansprüche 1 bis 8, **dadurch gekennzeichnet, dass** als Fettalkoholalkoxylate Ethoxylate eingesetzt werden.

10. Verwendung nach einem der Ansprüche 1 bis 9, **dadurch gekennzeichnet, dass** die Dichte des aus Phosphorsäureester und Fettalkoholalkoxylat bestehenden Gemischs 1,02 g/cm³ und die Viskosität 400 mPas beträgt.

11. Verwendung nach einem der Ansprüche 1 bis 10, **dadurch gekennzeichnet, dass** der pH-Wert der wasserverdünnbaren Beschichtungszusammensetzung 7,5 bis 8,5 beträgt.

12. Verwendung nach einem der Ansprüche 1 bis 11, **dadurch gekennzeichnet, dass** die wasserverdünnbare Beschichtungszusammensetzung herstellbar ist, indem eine Dispersion, enthaltend Effektpigmente, Phosphorsäureester sowie Fettalkoholalkoxylat hergestellt wird und anschließend die Dispersion mit Bindemitteln und den anderen Bestandtellen der Beschichtungsmittelzusammensetzung, wie Lösungsmittel, Füllstoffe, Weichmacher, Stabilisatoren, Netzmittel, Dispergierhilfsmittel, Verlaufsmittel, Entschäumer, Katalysatoren, sowie den weiteren Additiven vermischt wird.

13. Verwendung nach einem der Ansprüche 1 bis 12, **dadurch gekennzeichnet, dass** die wässrige Beschichtungszusammensetzung der Beschichtung von Metallen dient.

## Claims

1. The use of a water-thinnable coating composition comprising at least one phosphoric ester, at least one fatty alcohol alkoxylate, binders, inorganic pigments, metal pigments and, if desired, organic pigments and also further customary additives such as solvents, fillers, plasticizers, stabilizers, wetting agents, dispersing auxiliaries, levelling agents, defoamers, catalysts and also further additives, individually or in a mixture with one another, as a base coating composition for producing basecoat/clearcoat metallic coating systems.

2. The use as claimed in claim 1, wherein the water-thinnable coating composition is obtainable by adding a mixture consisting of effect pigments, phosphoric esters and fatty alcohol alkylates.

3. The use as claimed in claim 1, wherein the water-thinnable coating composition comprises metal phosphoric acid esters.

4. The use as claimed in claim 3, wherein the water-thinnable coating composition comprises aluminum phosphoric acid esters.

5. The use as claimed in any of claims 1 to 4, wherein the proportion of phosphoric ester and of fatty alcohol alkoxylate in the water-thinnable coating composition together is from 1 to 20% by weight based on the solids content of the pigment to be stabilized.

6. The use as claimed in claim 5, wherein the proportion of phosphoric ester and of fatty alcohol alkoxylate in the water-thinnable coating composition together is 1 to 10% by weight based on the solids content of the pigment to be stabilized.

7. The use as claimed in any of claims 1 to 6, wherein metal powders, individually or in a mixture of one another, are used as effect pigments.

8. The use as claimed in any of claims 1 to 7, wherein the effect pigments used are copper, copper alloys, aluminum and/or steel and/or pearl lustre pigments.

9. The use as claimed in any of claims 1 to 8, wherein said fatty alcohol alkoxylates are ethoxylates.

10. The use as claimed in any of claims 1 to 9, wherein the density of the mixture consisting of phosphoric ester and fatty alcohol alkoxylate is 1.02 g/cm³ and its viscosity is 400 mPas.

11. The use as claimed in any of claims 1 to 10, wherein the pH of the water-thinnable coating composition is from 7.5 to 8.5.

12. The use as claimed in any of claims 1 to 11, wherein the water-thinnable coating composition can be prepared by preparing a dispersion comprising effect pigment, phosphoric ester and fatty alcohol alkoxylate and then mixing the dispersion with binders and the other constituents of the coating composition, such as solvents, fillers, plasticizers, stabilizers, wetting agents, dispersing auxiliaries, levelling agents, defoamers, catalysts and the further additives.

13. The use as claimed in any of claims 1 to 12, wherein the aqueous coating composition is used for coating metals.

## Revendications

1. Utilisation d'une composition de revêtement diluable à l'eau, contenant au moins un ester d'acide phosphorique, au moins un produit d'alcoxylation d'alcool gras, un liant, des pigments minéraux, des pigments métalliques et éventuellement des pigments organiques, ainsi que d'autres adjuvants usuels tels que des solvants, charges, plastifiants, stabilisants, agents mouillants, adjuvants de dispersion, agents d'étalement, antimousses, catalyseurs, ainsi que d'autres additifs, individuellement ou en mélange entre eux, en tant que composition de revêtement de base pour la production de revêtements de peinture à effet métallique "Basecoat/Clearcoat".

2. Utilisation selon la revendication 1, **caractérisée en ce que** la composition de revêtement diluable à l'eau peut être obtenue par addition d'un mélange constitué de pigments à effet, d'esters d'acide phosphorique et de produits d'alcoxylation d'alcools gras.

3. Utilisation selon la revendication 1, **caractérisée en ce que** la composition de revêtement diluable à l'eau contient des esters métalliques d'acide phosphorique.

4. Utilisation selon la revendication 3, **caractérisée en ce que** la composition de revêtement diluable à l'eau contient des esters d'acide phosphorique avec de l'aluminium.

5. Utilisation selon l'une quelconque des revendications 1 à 4, **caractérisée en ce que** la proportion d'ester d'acide phosphorique et celle de produit d'alcoxylation d'alcool gras dans la composition de revêtement diluable à l'eau s'élèvent ensemble à 1 à 20 % en poids, par rapport à la matière solide du pigment à stabiliser.

6. Utilisation selon la revendication 5, **caractérisée en ce que** la proportion d'ester d'acide phosphorique et celle de produit d'alcoxylation d'alcool gras dans la composition de revêtement diluable à l'eau s'élèvent ensemble à 1 à 10 % en poids, par rapport à la matière solide du pigment à stabiliser.

7. Utilisation selon l'une quelconque des revendications 1 à 6, **caractérisée en ce qu'**on utilise en tant que pigment à effet des poudres métalliques seules ou en mélange entre elles.

8. Utilisation selon l'une quelconque des revendications 1 à 7, **caractérisée en ce qu'**on utilise en tant que pigment à effet du cuivre, des alliages de cuivre, de l'aluminium et/ou de l'acier et/ou des pigments nacrés.

9. Utilisation selon l'une quelconque des revendications 1 à 8, **caractérisée en ce qu'**on utilise comme produits d'alcoxylation d'alcools gras des produits d'éthoxylation.

10. Utilisation selon l'une quelconque des revendications 1 à 9, **caractérisée en ce que** la densité du mélange constitué d'ester d'acide phosphorique et de produit d'alcoxylation d'alcool gras est de 1,02 g/cm³, et la viscosité est de 400 mPa.s.

11. Utilisation selon l'une quelconque des revendications 1 à 10, **caractérisée en ce que** le pH de la composition de revêtement diluable à l'eau a une valeur de 7,5 à 8,5.

12. Utilisation selon l'une quelconque des revendications 1 à 11, **caractérisée en ce que** la composition de revêtement diluable à l'eau peut être préparée par préparation d'une dispersion contenant des pigments à effet, des esters d'acide phosphorique ainsi qu'un produit d'alcoxylation d'alcool gras, et ensuite mélange de la dispersion avec des liants et les autres composants de la composition de revêtement, tels que des solvants, des charges, des plastifiants, des stabilisants, des agents mouillants, des adjuvants de dispersion, des agents d'étalement, des antimousses, des catalyseurs ainsi que les autres additifs.

13. Utilisation selon l'une quelconque des revendications 1 à 12, **caractérisée en ce que** la composition aqueuse de revêtement sert au revêtement de métaux.
